# EUROPEAN PATENT APPLICATION

(11) **EP 2 929 975 A1**
(43) Date of publication of application: **14.10.2015**
(21) Application number: 13860327.9
(22) Date of filing: 27.11.2013
(51) Int. Cl.: B23K 35/22, B22F 1/00, B23K 1/00, B23K 1/20, B23K 3/06, B23K 35/30, C22C 5/02, B22F 9/08, B23K 101/42

(54) **AU-SN-BI ALLOY POWDER PASTE, AU-SN-BI ALLOY THIN FILM, AND METHOD FOR FORMING AU-SN-BI ALLOY THIN FILM**

(30) Priority: 04.12.2012 JP 2012265009
(71) Applicant: Mitsubishi Materials Corporation, Chiyoda-ku Tokyo 100-8117 (JP)
(72) Inventor: ISHIKAWA Masayuki, Sanda-shi Hyogo 669-1339 (JP); YAMAMOTO Yoshifumi, Sanda-shi Hyogo 669-1339 (JP)
(74) Representative: Hoffmann Eitle
(86) International application number: PCT/JP2013/081901
(87) International publication number: WO 2014/087896

(57) **Abstract**

The present invention provides to an Au-Sn-Bi alloy film which has an excellent bondability on a metalized layer formed on an LED element or a substrate as a bonding layer made of the Au-Sn-Bi alloy and is uniform and thin. In the present invention, an Au-Sn-Bi alloy thin film which has the thickness of 5 µm or less and includes at least a eutectic structure can be formed by using an Au-Sn-Bi alloy powder paste that mixes the Au-Sn alloy powder containing 20 wt% to 25 wt% of Sn, 0.1 wt% to 5.0 wt% of Bi, and a balance of Au, and having a particle diameter of 10 µm or less with an RA flux of 15 wt% to 30 wt%, screen printing the Au-Sn-Bi alloy powder paste in a predetermined region on the Au metallized layer, and subsequently, heating, melting and then solidifying the Au-Sn-Bi alloy powder.

## Description

### TECHNICAL FIELD

The present invention relates to an Au-Sn-Bi alloy thin film, a method for forming an Au-Sn-Bi alloy thin film, and an Au-Sn-Bi alloy powder paste. In particular, the present invention relates to a method for forming an Au-Sn-Bi alloy thin film to which a printing method using an Au-Sn-Bi alloy powder paste can be applied, and which can form an Au-Sn-Bi alloy thin film which is both uniform and thin while securing good bondability, and can reduce costs due to a reduction in Au.

Priority is claimed on Japanese Patent Application No. 2012-265009, filed December 4,2012, the content of which is incorporated herein by reference.

### BACKGROUND ART

In general, Au-Sn alloy solder is used in bonding of a semiconductor device such as a GaAs optical device, a GaAs high frequency device or a thermoelectric device and a substrate, or package sealing of a SAW filter, a crystal oscillator or the like in which a fine and air-tight seal is needed. It is known that the Au-Sn alloy solder contains 15 mass% to 25 mass% of Sn and the balance of Au and inevitable impurities, and that the Au-Sn alloy solder which is actually used, is made up of an Au-Sn eutectic alloy mainly containing 20 mass% of Sn and the balance of Au and inevitable impurities.

It is known that, for example, the Au-Sn alloy solder is processed into a chip shape or a particle shape, and that, for example, at the time of bonding the device and the substrate, a reflow process is performed with interposing the Au-Sn alloy solder which is processed into the chip shape or the particle shape between the bonding bodies to bond them. On the other hand, It is also known that an Au-Sn alloy material is processed into a powder shape, the Au-Sn alloy powder is made into a paste shape by being mixed and kneaded with a commercially available flux to be used as an Au-Sn alloy solder paste. Here, it is known that the Au-Sn alloy powder is produced by, for example, a gas atomizing method. As a bonding method using the Au-Sn alloy solder paste, performing bonding by a reflow process after applying the Au-Sn alloy solder paste (for example, see PTL 1 to PTL 3) is also known.

There are various uses for an optical communication apparatus such as optical amplification, and multiplexing. In general, many optical communication apparatus includes a light source such as a light emitting diode (LED) as a light signal generating source. For example, in loading the LED onto an optical bench, from the viewpoint of heat resistance and reliability of connection, generally, bonding using the Au-Sn alloy is performed. In the related art, a pad for connection which is made of the Au-Sn alloy, is formed by accumulation such as vapor deposition or sputtering.

### CITATION LIST

### PATENT LITERATURE

[PTL 1] Japanese Unexamined Patent Application, First Publication No. 2004-141937
[PTL 2] Japanese Unexamined Patent Application, First Publication No. 2005-302776
[PTL 3] Japanese Unexamined Patent Application, First Publication No. 2008-137018

### SUMMARY OF INVENTION

### TECHNICAL PROBLEM

However, in the formation of a pad for connection, the formation of a film of several µm is needed, which takes a long time, a photolithography process is needed in order to form a pad pattern, and manufacturing cost and process time increase. Moreover, by performing sputtering or vapor deposition at spots other than a desired spot, many losses of materials occur. In the case of forming an Au-Sn film by vapor deposition or the like, typically, since it is necessary to separately prepare raw material pellets of Au and Sn and to form a film by binary thin film formation, it is hard to make the composition totally uniform, and thus, subtle variation in a melting temperature, or unevenness in the flow of a molten metal is caused. It may pose a problem for mounting of an optical device such as the LED. Still further, by using an Au-Sn alloy target or the like, even when the film is formed by one supply source, as the use of the alloy target proceeds, deviation of the composition due to a difference of yield occurs, and resultingly, it is difficult to maintain a uniform composition.

Therefore, in a high-frequency circuit component or the like, a method of producing a paste using a particle-shaped Au-Sn alloy material and of forming a pattern by a printing method using the paste is also performed. According to the printing method, the process cost and time are greatly reduced, and additionally, the loss becomes small since the material can be supplied to only the desired spot. Therefore, the printing method is a very useful bonding material formation method. However, there are difficulties in the case of being applied to the optical device described above. That is, in the mounting of an LED or the like, since optical bonding to a lens, a fiber, and other components with low loss is needed, highly accurate alignment of an optical axis direction, a width direction and a height direction are needed. However, in the printing of the Au-Sn alloy paste in the related art, after melting, it is difficult to form a so-called "thin film", and to form an Au-Sn alloy having smooth height in a pad area. It is shown that a convex Au-Sn alloy is formed on the pad area, and the alignment is hard to be highly accurate at the time of loading the optical device.

An object of the present invention is to provide an Au-Sn-Bi alloy powder-containing paste, an Au-Sn-Bi alloy thin film, and a method for forming an Au-Sn-Bi alloy thin film in which the Au-Sn-Bi alloy powder-containing paste is produced using a powder material of an Au-Sn-Bi ternary alloy to which Bi is added in order to improve wettability of the Au-Sn alloy, thereby making the application to the printing method easy, the applied Au-Sn-Bi alloy powder-containing paste is melted and solidified by a reflow process to form an Au-Sn-Bi alloy thin film which is both uniform and thin while securing good bondability, and costs due to the reduction in Au can be reduced.

### SOLUTION TO PROBLEM

The above-described Au-Sn alloy powder which is used in the Au-Sn alloy solder paste, is typically produced using a gas atomizing method including: melting the Au-Sn alloy to form the molten metal; maintaining the molten metal at a temperature of 300°C to 400°C; gravity dropping the molten metal which is maintained at the temperature; ejecting an inert gas to the gravity-dropping molten metal from the vicinity thereof to make the inert gas with high-pressure collide with the dropping molten metal. The Au-Sn alloy powder which is obtained by the gas atomizing method has an average particle diameter of 10 µm to 100 µm, a surface of the obtained Au-Sn alloy powder is likely to be oxidized, and an oxide film is generally formed on the surface. Since a rosin-based pasting agent is used in order to remove the oxide film, the Au-Sn alloy solder paste is produced by mixing the rosin-based pasting agent with the Au-Sn alloy powder.

However, it is uncommon to use the Au-Sn alloy powder as a raw material of the Au-Sn alloy solder paste immediately after being produced, and typically, the Au-Sn alloy powder is temporarily stored after being produced, and is taken out for use as necessary. Therefore, in the Au-Sn alloy solder paste which is produced by using the pasting agent not containing rosin, the smaller the particle diameter of the Au-Sn alloy powder is, the more insufficient the removal of the surface oxide film which is formed on the surface of the Au-Sn alloy powder is. Hence, the Au-Sn alloy solder not containing rosin may not secure sufficient wet-spreading properties, in comparison with the Au-Sn alloy solder paste which is produced using the pasting agent containing rosin. The Au-Sn alloy solder paste using a non-halogen flux is similar thereto.

The inventors have worked to form an Au-Sn-Bi alloy thin film which is both uniform and thin while securing good bondability, and of which the wettability at the time of being bonded is improved by adding Bi to the above-mentioned Au-Sn alloy, as a bonding layer which is formed on a metallized layer of an LED device or substrate, in view of the above problems.

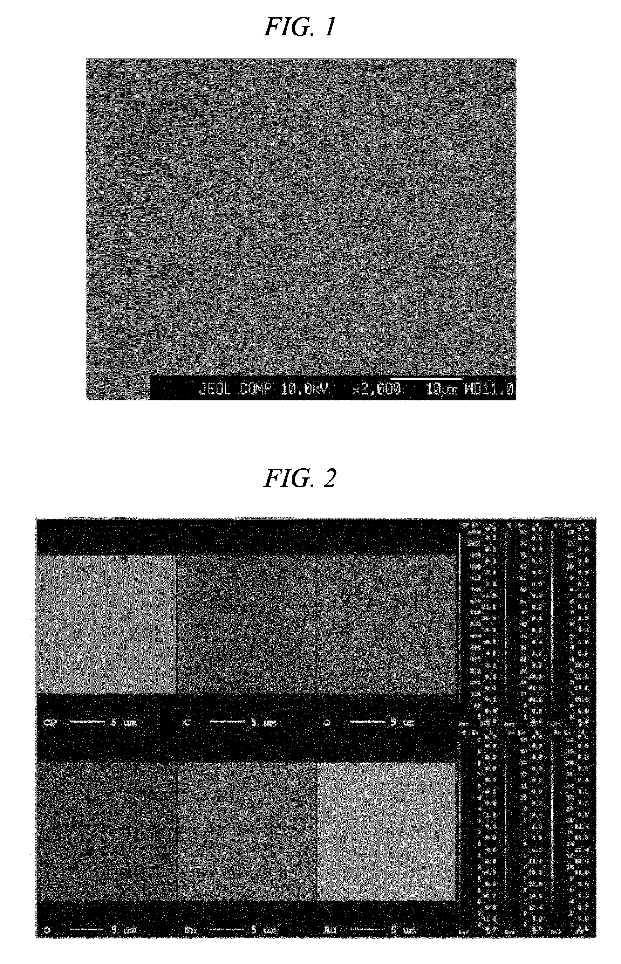

For example, at the time of loading the LED device onto the substrate, it is necessary for the LED device to adhere to the metallized layer, and for the bonding layer to be uniform, and it is required that the thickness of the bonding layer be thin. The formation of the thin Au-Sn alloy bonding layer can be realized by sputtering, vapor deposition or the like, as described above. Here, regarding an example of a thin film in which an Au-Sn thin film is formed by alternately performing sputtering using an Au metal target and a Sn metal target, a surface image (secondary electron image, SEI) which is shot by a scanning electron microscope (SEM), is shown in FIG. 1. A composition image (COMP image) and a mapping image of each element by an electron probe microanalyser (EPMA) of an Au-Sn alloy thin film which is formed by sputtering using an Au-Sn alloy sputtering target are shown in FIG. 2. Although all of the original EPMA images are color images, the EPMA images are described after being converted into black and white images depending on a gray scale, in which the higher brightness is, the higher the content thereof is.

From the images, the surface of the Au-Sn thin film of a representative example shows that the Au-Sn thin film is uniform. However, in the Au-Sn thin film bonding layer which is formed by sputtering, even if the Au-Sn thin film bonding layer is uniformly and thinly formed on the metallized layer of the LED device, since a melting point of Sn is 232°C and the melting point of Au is 1000°C or more, Au-Sn is molten by incorporating Au into molten Sn after Sn is molten when the Au-Sn thin film is heated in order to load the LED device onto the substrate. Therefore, the heating time becomes long, and the melting properties are deteriorated. Consequently, bonding reliability becomes low, and it is not possible to limit a cost increase due to rework.

The present inventors applied the paste containing the Au-Sn-Bi alloy powder using a printing method on the metallized layer, heated the paste by a reflow process to melt the Au-Sn-Bi alloy powder, and then solidified the paste in order to form an Au-Sn-Bi alloy thin film on the metallized layer for the bonding of the LED device and the substrate. Thereby, it was found that a bonding layer of the Au-Sn-Bi alloy which had a film thickness of 5 µm or less and was uniform and thin while securing good bondability (wettability) can be obtained by refining the Au-Sn-Bi alloy powder and improving fluidity of the paste in order to limit the amount of Au used.

Regarding the paste containing the Au-Sn-Bi alloy powder, it was found that the fluidity of the Au-Sn-Bi alloy powder paste could be improved by using a fine Au-Sn-Bi alloy powder with a particle diameter of 10 µm or less and increasing the amount of mixed flux. It was found that removal of the oxidation film of the fine powder could be enhanced and the wettability could be improved by using a flux including at least an activator. Moreover, it was found that the amount of the paste applied to the metallized layer can be adjusted easily and the paste could be applied uniformly, in the applying using a printing method. It was also found that the Au-Sn-Bi alloy thin film had at least a eutectic structure (for example, lamellar structure) by processing the applied Au-Sn-Bi alloy powder paste using a reflow process to produce the molten Au-Sn-Bi alloy, and then solidifying it, and thereby the melting properties at the time of the bonding could be improved.

Furthermore, it was found that if the Au-Sn-Bi alloy was used as a powder material, the surface tension thereof at the time of melting was smaller than the Au-Sn alloy by adding Bi (in the case of being compared at the same temperature), and that the Au-Sn-Bi alloy was excellent in wettability, and the bonding reliability thereof at the time of bonding the device was further improved.

Accordingly, the present invention has been developed from the above findings, and has adopted the following configurations in order to solve the above problems.
(1) An Au-Sn-Bi alloy powder paste which is a mixture including: an Au-Sn-Bi alloy powder containing 20 wt% to 25 wt% of Sn, 0.1 wt% to 5.0 wt% of Bi, and the balance of Au and having a particle diameter of 10 µm or less; and 15 wt% to 30 wt% of an flux containing at least an activator.
(2) An Au-Sn-Bi alloy thin film including: 20 wt% to 25 wt% of Sn, 0.1 wt% to 5.0 wt% of Bi, and the balance of Au, and having a thickness of 5 µm or less, the thin film having: at least a eutectic structure.
(3) A method for forming an Au-Sn-Bi alloy, including: screen-printing an Au-Sn-Bi alloy powder paste in a predetermined region on a metallized layer, the paste being a mixture comprising: an Au-Sn-Bi alloy powder containing 20 wt% to 25 wt% of Sn, 0.1 wt% to 5.0 wt% of Bi, and the balance of Au and having a particle diameter of 10 µm or less; and 15 wt% to 30 wt% of an flux containing at least an activator; and heating, melting and then solidifying the Au-Sn-Bi alloy powder to form an Au-Sn-Bi alloy thin film having at least a eutectic structure.
(4) In the method for forming an Au-Sn alloy thin film according to the above (3), screen-printing is performed by gap printing using a screen mask which has a mesh corresponding to the predetermined region.

Hereinafter, the configurations adopted in order to solve the above problems in the present invention will be described.

In general, it is known that a phase diagram can be drawn in which a phase changes from a liquid phase to a solid phase or from a solid phase into a liquid phase due to a relationship between temperature and an element concentration ratio, in the case that an Au-Sn binary alloy is a eutectic type. In the phase diagram, a eutectic point is present. When the concentration ratio at the eutectic point is Sn 20% and Au 80% (written as Au-20Sn), a eutectic temperature thereof is 280°C. This indicates that if the temperature is equal to or greater than the eutectic temperature, the Au-Sn alloy becomes a liquid phase, and if the temperature is equal to or less than the eutectic temperature, the Au-Sn alloy enters a solid phase. Here, when the molten Au-Sn alloy is cooled, the Au-Sn alloy changes into being in a solid phase from being in a liquid phase at the eutectic temperature. Here, a eutectic alloy which is formed when the Au-Sn alloy enters a solid phase has a eutectic structure (for example, lamellar structure) in which an Au-rich portion and a Sn-rich portion are alternately present, and as the eutectic structure, various forms such as a layer-shaped eutectic structure are known.

On the other hand, when the concentration of Sn exceeds 20%, in the process of cooling the molten Au-Sn alloy, if the temperature of the Au-Sn alloy reaches a liquidus line, a primary crystal is crystallized, and then if the temperature is equal to or less than the eutectic temperature, particles of the primary crystal are dispersed in the eutectic structure. However, this eutectic alloy has at least the eutectic structure, and thereby, it is easy to re-melt the solidified Au-Sn alloy film. In contrast, in the above-described thin film example of forming the Au-Sn thin film by alternately performing sputtering using the Au metal target and the Sn metal target, a thin and uniform film can be formed. However, since the film is formed by only arraying atoms of Au and Sn, the re-melting thereof is not easy. That is, the reason is considered to be because the film of this a thin film example have no eutectic structure.

In an Au-Sn-Bi alloy powder paste according to the present invention, an Au-Sn-Bi alloy powder that contains 20 wt% to 25 wt% of Sn, 0.1 wt% to 5.0 wt% of Bi, and the balance of Au, is used. In the case of the Au-Sn-Bi alloy powder, a solidified Au-Sn-Bi alloy thin film includes the eutectic structure in which the Au-rich portion and the Sn-rich portion are alternately present, in the same manner as in an Au-Sn alloy. Moreover, in the present invention in which Bi is added to an Au-Sn alloy, it is confirmed that the added Bi is present in the same area as Sn by the observation of the composition image (COMP image) and the mapping image of each element using the electron probe microanalyser (EPMA). Further, there is differential scanning calorimetry (DSC measurement) date showing that the alloy has a eutectic composition which has one endothermic peak and one exothermic peak in heating process and cooling process, and of which phase changes from solid to liquid or from liquid to solid at a certain temperature. Thus, the Au-Sn-Bi alloy thin film according to the present invention also includes a eutectic structure.

In the case of forming the Au-Sn alloy film using a solder paste known in the related art in which the Au-Sn alloy powder is mixed with flux, by applying the paste to a metallized layer which is formed on the substrate and performing a reflow process, if the paste is thinly applied to the metallized layer in order to make the Au-Sn alloy film thin, the Au-Sn alloy powder is melted by heating in the reflow process, a dewetting (shrinkage) phenomenon occurs, and the paste is agglomerated into an island shape. This causes a state in which the base layer surface can be seen through, and the thickness of the film becomes uneven. Therefore, the paste of the related art is not suitable for thin film formation.

In the present invention, the object thereof is to provide a uniform Au-Sn-Bi alloy thin film having a thickness of 5 µm or less by devisal of the Au-Sn-Bi alloy powder paste. Further, the melting properties are improved by forming an Au-Sn -Bi alloy thin film which includes at least a eutectic structure.

The Au-Sn-Bi alloy powder which is used in the Au-Sn-Bi alloy powder paste according to the present invention, has a composition containing 20 wt% to 25 wt% of Sn, 0.1 wt% to 5.0 wt% of Bi, and the balance of Au. If the amount of Sn is less than 20 wt%, the surface tension becomes strong when being melted, and an uneven film is formed. Moreover, if the amount of Sn exceeds 25 wt%, the Au-Sn alloy deviates from the eutectic alloy, that is, the amount of the eutectic structure of the Au-Sn alloy film becomes small, and thereby the wettability is lowered. Thus, it is preferable that the amount of Sn be 20 wt% to 25 wt% in the Au-Sn-Bi alloy powder.

Additionally, if the amount of Bi in the Au-Sn-Bi alloy powder is less than 0.1 wt%, it is not possible to obtain the effect of lowering of the surface tension of the powder while being melted. If the amount of Bi exceeds 5.0 wt%, the melting point of the Au-Sn-Bi alloy is lowered, thereby undermining an advantage of a high temperature solder.

Commonly, a base layer (for example, Ni or the like) is provided as an electrode. When the Au-Sn alloy solder is used, an Au metallized layer is formed on the surface of the base layer, in consideration of the wettability with the base layer. In the process of applying the Au-Sn alloy-containing paste to the metallized layer, and heating and melting the Au-Sn alloy powder, Au of the metallized layer is incorporated into the melted Au-Sn alloy, and the Au concentration in the alloy increases. Therefore, in consideration of a loss of the concentration balance in the Au-Sn alloy, the Sn content in the Au-Sn alloy powder is determined. Additionally, the thinner the film becomes, the larger the influence of the loss becomes.

Furthermore, the particle diameter of the Au-Sn-Bi alloy powder is 10 µm or less on average. If the particle diameter exceeds 10 µm, for example, when the Au-Sn-Bi alloy powder paste is applied to the predetermined region on the metallized layer by a screen printing method, a filling failure occurs, and there is a possibility that the film thickness becomes uneven. If the particle diameter is large, at the time of melting, a dewetting (shrinkage) phenomenon occurs, and thus, it is not preferable. Therefore, it is preferable that the particle diameter of the Au-Sn-Bi alloy powder be 10 µm or less on average.

Generally, the flux which is used in the solder paste, as defined by Japanese Industrial Standards (JIS, for example, JIS Z 3284: 2006 (which is the standard relating to the solder paste defining classification or the like of the flux)) is known to include an activator having a cleaning action which removes an oxide of the metal surface by a chemical action. The composition of the oxidation film which can be removed is determined based on degrees of activity of the flux. Therefore, the more stable metal the oxidation film includes, the stronger the activity thereof is required. When washing is not needed, a non-halogen flux which does not include an activator is used. Moreover, as an active flux, an RA (Rosin Activated) flux or the like, is known. The RA flux is a flux to which a basic organic compound as an activator is added, and is a flux with the strongest activity of the old MIL standard (United States Military Standard). For example, in an activator content test (potentiometric titration) of JIS Z 3197 (test method of the flux for soldering), it is preferable that the value thereof be 0.15% or more.

In the Au-Sn-Bi alloy powder paste according to the present invention, a flux including at least an activator is mixed with the Au-Sn-Bi alloy powder. The amount of the flux mixed with the Au-Sn-Bi alloy powder is 15 wt% to 30 wt% of the Au-Sn-Bi alloy powder paste. In order to form a thin Au-Sn-Bi alloy thin film having a film thickness of 5 µm or less, a fine powder with a particle diameter of 10 µm or less, is used as the Au-Sn-Bi alloy powder, but if the Au-Sn-Bi alloy powder becomes a fine powder which have a particle diameter of 10 µm or less, an active type flux including an activator, is necessary for the removal of a natural oxidation film (SnO) which is formed on a powder surface. In the non-halogen flux which does not include the activator, since a reduction action thereof is weak, it is not possible to remove the natural oxidation film completely. Furthermore, the RA flux is mixed at 15 wt% to 30 wt%. In the case that a mixing ratio (flux ratio) is less than 15 wt%, since it is difficult to thinly apply the paste, it is not possible to form a thin film. On the other hand, if the mixing ratio exceeds 30 wt%, the film may be uneven. Therefore, it is preferable that the mixing ratio of the RA flux be 15 wt% to 30 wt%, in consideration of the fluidity of the paste at the time of the screen printing, and removability of the natural oxidation film.

In the method for forming an Au-Sn alloy thin film of the present invention, the Au-Sn-Bi alloy thin film including at least a eutectic structure is formed by screen printing the above-described Au-Sn-Bi alloy powder paste, in the predetermined region on the metallized layer, and subsequently, melting and then solidifying the Au-Sn-Bi alloy powder paste by a reflow process. Here, a screen printing method is adopted, since it is easy to adjust the amount of paste which is applied to the predetermined region on the metallized layer. If the amount of paste becomes small, it is suitable for forming a thin Au-Sn-Bi alloy film. In particular, since a screen mask in which the mesh is arranged in the predetermined region is used, the wire diameter of the mesh, the opening ratio, and the thickness of emulsion can be selected, and therefore a volume of paste passing therethrough can be easily adjusted. Moreover, by the gap printing method, uniform paste printing can be realized. If the Au-Sn-Bi alloy powder paste is applied to the metallized layer, the paste is distributed into a dot shape within a predetermined region, and thereby, it is possible to further reduce the paste amount, and obtain an Au-Sn-Bi alloy thin film having a film thickness of 5 µm or less. Furthermore, since stirring is used for mixing of the Au-Sn-Bi alloy powder and flux, there is a possibility that bubbles are mixed therein. Since the presence of the bubble influences the uniformity of the film, it is preferable to carry out vacuum defoaming.

Moreover, in the method for forming an Au-Sn-Bi alloy thin film of the present invention, the Au-Sn-Bi alloy thin film is formed by screen printing the Au-Sn-Bi alloy powder paste in the predetermined region on the metallized layer, and subsequently, by the reflow process, heating, melting and solidifying the Au-Sn-Bi alloy powder. The Au-Sn-Bi alloy powder is temporarily heated and melted, and thereby, in the process of cooling the molten Au-Sn-Bi alloy, the thin film includes at least a eutectic structure, resulting that the melting properties at the time of the bonding are good.

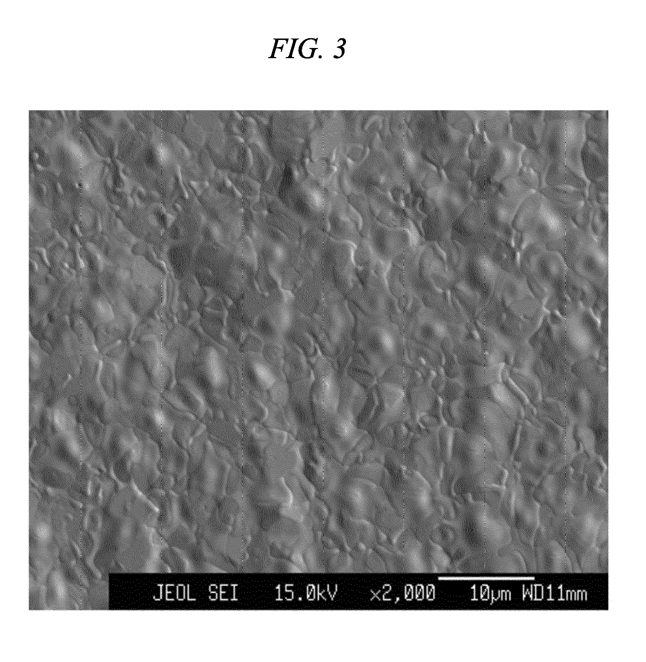

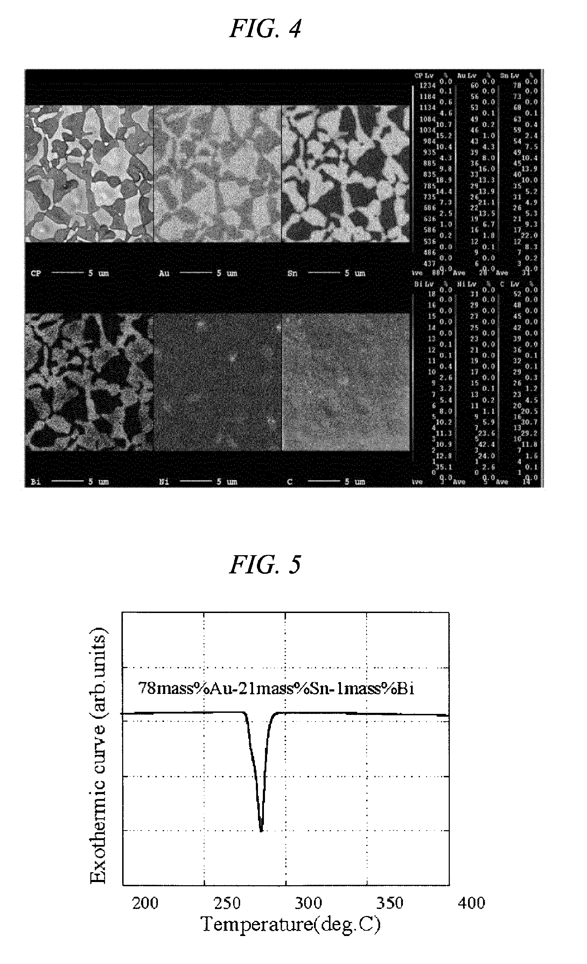

Regarding a representative example of the Au-Sn-Bi alloy thin film which is formed on the Ni base layer by using the Au-Sn-Bi alloy-containing paste of the present invention described above, in FIG. 3, a photograph of the surface image (SEI) which is shot by a scanning electron microscope (SEM) is shown. Moreover, regarding a representative example of the Au-Sn-Bi alloy thin film, in FIG. 4, a composition image (COMP image) and a mapping image of each element by the electron probe microanalyser (EPMA) are shown. According to the images, it is shown that the Au-Sn-Bi alloy thin film of the present invention has a eutectic structure in which an Au-rich portion and Sn-rich portion are alternately present, and the added Bi is present at the same spot as Sn. Still further, in FIG. 5, a graph showing a result of differential scanning calorimetry (DSC measurement) according to a representative example of the Au-Sn-Bi alloy thin film of the present invention is shown. The graph shows one endothermic peak and one exothermic peak in the heating process and the cooling process. This shows a eutectic composition in which a phase change from the solid phase to the liquid phase, or from the liquid phase to the solid phase at a certain temperature occurs. Taken together, the Au-Sn-Bi alloy thin film according to the present invention also includes a eutectic structure having a eutectic point.

### ADVANTAGEOUS EFFECTS OF INVENTION

As described above, according to the present invention, since application is easy by the printing method of the Au-Sn-Bi alloy powder paste, and moreover, a eutectic structure is formed by heating, melting and then solidifying an Au-Sn alloy powder paste, it is possible to form an Au-Sn-Bi alloy thin film which is both uniform and thin while securing good bondability (wettability), as a bonding layer. Therefore, in loading an LED device or the like onto a substrate, it is possible to achieve cost reduction due to the reduction in Au, and it is possible to form an Au-Sn-Bi alloy bonding layer which is both uniform and thin. Accordingly, the present invention contributes to productivity improvement of the apparatus onto which the LED device is loaded.

### BRIEF DESCRIPTION OF DRAWINGS

FIG. 1 is a photograph showing a surface image (SEI) shot by a scanning electron microscope (SEM) of an example of an Au-Sn thin film which is formed by alternately performing sputtering using an Au metal target and a Sn metal target.
FIG. 2 is a photograph showing a composition image (COMP image) and a mapping image of each element taken by an electron probe microanalyser (EPMA) according to the Au-Sn thin film which is formed by sputtering of the Au metal target and the Sn metal target.
FIG. 3 is a photograph showing the surface image (SEI) shot by the scanning electron microscope (SEM) of a representative example of an Au-Sn alloy thin film which is formed by using an Au-Sn-Bi alloy-containing paste of the present invention.
FIG. 4 is a photograph showing a composition image (COMP image) and a mapping image of each element by the electron probe microanalyser (EPMA) according to a representative example of an Au-Sn-Bi alloy thin film of the present invention.
FIG. 5 is a graph showing a result of differential scanning calorimetry (DSC measurement) according to a representative example of the Au-Sn-Bi alloy thin film of the present invention.

### DESCRIPTION OF EMBODIMENTS

Next, a method for forming an Au-Sn-Bi alloy thin film using an Au-Sn-Bi alloy-containing paste of the present invention will be specifically described by the following Examples and Comparative Examples.

### (Examples)

While maintaining a molten metal of an Au-Sn-Bi alloy which was melted in a high frequency melting furnace at a temperature of 800°C, the molten metal was mechanically stirred by rotating a propeller for 3 hours at 800 rotation/min. Then, the molten metal was dropped from a nozzle provided in a bottom portion of the high frequency melting furnace by applying a pressure of 500 kPa thereto, and simultaneously, Ar gas was ejected from a gas nozzle having a diameter of 1.5 mm which was arranged so as to have a nozzle gap of 0.2 mm in the vicinity of the nozzle with an injection pressure of 6000 kPa toward the molten metal which was dropping. Thus, gas-atomized powder of the Au-Sn-Bi alloy was manufactured. The metal composition (wt%) of the obtained atomized powder, is shown in Table 1. The gas-atomized powder was classified by an air classifier, and an Au-Sn-Bi alloy powder having a particle diameter of 10 µm or less was obtained, as shown in Table 1. The composition of the Au-Sn-Bi alloy is adjusted in the melting stages.

By using the obtained Au-Sn-Bi alloy powder, a commercially available RA flux (manufactured by Mitsubishi Materials Corporation, for example) was mixed so as to have a flux ratio (wt%) shown in Table 1, and Au-Sn-Bi alloy powder pastes of Examples 1 to 7 were manufactured. Moreover, for comparison with Examples, by using the obtained Au-Sn-Bi alloy powder, a commercially available RA flux, an RMA (Rosin Mildly Activated) flux, or a non-halogen flux was mixed so as to have a flux ratio (wt%) shown in Table 1, and Au-Sn-Bi alloy powder pastes of Comparative Examples 1 to 8 were manufactured. Furthermore, the related art in which an Au-Sn thin film is formed by alternately performing sputtering using an Au metal target and a Sn metal target is shown in Table 1 as Comparative Example 9.

**[Table 1]**

| | Au-Sn-Bi Alloy Powder | | | | Flux | |
|---|---|---|---|---|---|---|
| | Metal Composition (wt%) | | | Particle Diameter (µm) | | |
| | Sn | Bi | Au | | Type | Amount (wt%) |
| Example 1 | 21 | 1 | Balance | 10 | RA | 28 |
| Example 2 | 21 | 2 | Balance | 8 | RA | 25 |
| Example 3 | 22 | 1 | Balance | 4 | RA | 22 |
| Example 4 | 20.5 | 0.5 | Balance | 8 | RA | 15 |
| Example 5 | 21 | 1 | Balance | 8 | RA | 25 |
| Example 6 | 23 | 1 | Balance | 8 | RA | 30 |
| Example 7 | 24 | 0.5 | Balance | 8 | RA | 25 |
| Comparative Example 1 | 22 | 1 | Balance | 11 | RA | 25 |
| Comparative Example 2 | 22 | 1 | Balance | 15 | RA | 8 |
| Comparative Example 3 | 21 | 1 | Balance | 8 | Non-Halogen | 25 |
| Comparative Example 4 | 22 | 1 | Balance | 8 | RA | 14 |
| Comparative Example 5 | 22 | 1 | Balance | 8 | RA | 32 |
| Comparative Example 6 | 18 | 0.5 | Balance | 8 | RA | 25 |
| Comparative Example 7 | 21 | 0.05 | Balance | 8 | RA | 25 |
| Comparative Example 8 | 26 | 2 | Balance | 8 | RA | 25 |
| Comparative Example 9 | 20 | 0 | Balance | Sputtering Film | | |

Next, the manufactured Au-Sn-Bi alloy powder pastes of Examples 1 to 7 and Comparative Examples 1 to 8 was applied to a predetermined region of a substrate using a screen printing method. In the screen printing method, gap printing was performed by using a mesh mask which had an opening of 33 µm, the number of mesh of 500, the wire diameter of 18 µm, and the thickness of 29 µm. ANi layer was formed on the substrate, and an Au metallized layer was formed on the Ni layer. The Au-Sn-Bi alloy powder paste was applied to the metallized layer. Thereafter, the Au-Sn-Bi alloy powder was heated and melted by performing a reflow process at a temperature: 300°C, and thereby a molten film of the Au-Sn-Bi alloy was formed on the Ni layer. Thereafter, the molten film solidified by being cooled to a room temperature, thereby forming Au-Sn-Bi alloy thin films of Examples 1 to 7 and Comparative Examples 1 to 8.

Thereafter, regarding the formed Au-Sn-Bi alloy thin films of Examples 1 to 7 and Comparative Examples 1 to 9, by a procedure described below, the uniformity of the film (presence or absence of unevenness due to shrinkage) and the film thickness were measured, and the powder melting properties and the device bondability were evaluated.

### <Confirmation of Uniformity (Presence or Absence due to Shrinkage) of Film>

It is possible to confirm a dewetting (shrinkage) phenomenon in the thin film by an optical microscope or a stereoscopic microscope. Therefore, for example, if a state was achieved where it is possible to see through the Ni layer, it was determined that shrinkage occurs. If the Ni layer was not seen, the case was evaluated as "good".

### <Measurement of Film Thickness>

The film thickness was measured by a laser microscope. A case in which a uniform film of 5 µm or less was obtained was evaluated as "good".

### <Confirmation of Powder Melting Properties>

Regarding the Au-Sn-Bi alloy thin film, by using the optical microscope, the presence state of non-molten or non-agglomerated Au-Sn-Bi alloy powder particles was confirmed. A case in which the presence of Au-Sn-Bi alloy powder particles could not be confirmed was evaluated as "good".

### <Measurement of Device Bondability>

In the state of loading a LED device having an 800 µm square onto the substrate, shear strength was measured at a test speed of 100 µm/s. A case of 50 N/mm² or more was evaluated as "good".

### <Comprehensive Evaluation>

By the following standards, comprehensive evaluation was performed.
O: all evaluations (uniformity of the film, film thickness, powder melting properties, and device bondability) were "good"
X: at least one evaluation was not "good" (poor)

The above results are shown in the following Table 2.

**[Table 2]**

| | Evaluation | | | | Comprehensive Evaluation |
|---|---|---|---|---|---|
| | Uniformity Of Film (Presence or absence of unevenness due to shrinkage) | Film Thickness | Powder Melting Properties | Device Bondability (N/mm²) | |
| Example 1 | Good | 1.4 µm | Good | 62 | O |
| Example 2 | Good | 2.3 µm | Good | 78 | O |
| Example 3 | Good | 1.7 µm | Good | 72 | O |
| Example 4 | Good | 4.2 µm | Good | 91 | O |
| Example 5 | Good | 1.9 µm | Good | 61 | O |
| Example 6 | Good | 0.75 µm | Good | 58 | O |
| Example 7 | Good | 3.0 µm | Good | 62 | O |
| Comparative Example 1 | Shrinkage partially occurred (presence of unevenness) | Not uniform film | Good | 62 | X |
| Comparative Example 2 | Shrinkage occurred (presence of unevenness) | Not uniform film | Good | 72 | X |
| Comparative Example 3 | Shrinkage did not occur, but a lot of non-agglomerated powder was present on solder | Not uniform film | Non-agglomerated powder was present | 61 | X |
| Comparative Example 4 | Shrinkage partially occurred (presence of unevenness) | Not uniform film | Good | 83 | X |
| Comparative Example 5 | Solder was not wet-spread, and base was seen through | A part of film was not formed | Good | 38 | X |
| Comparative Example 6 | Non-agglomerated powder was present, and a part of film was not formed | A part of film was not formed | Non-agglomerated powder was partially present | 29 | X |
| Comparative Example 7 | Shrinkage partially occurred (absence of unevenness) | Film was not uniform | Good | 88 | X |
| Comparative Example 8 | Non-agglomerated powder was present, and a part of film was not formed | A part of film was not formed | Non-agglomerated powder was partially present | 55 | X |
| Comparative Example 9 | Good | 3.0 µm | | 42 | X |

According to Table 2, the Au-Sn alloy thin film of Comparative Example 9, shows that the good results were obtained regarding the uniformity of the film and the thinning of the film, but the bondability of the device was determined to be low, and the bondability was not good. In contrast, in all of the Au-Sn-Bi alloy thin films of Examples 1 to 7, it was possible to form the films which were sufficiently thin films having the thicknesses of 5 µm or less and uniform films. Therefore, by using the Au-Sn-Bi alloy thin films of Examples 1 to 7, when the LED device was loaded onto the substrate, in comparison to the related art, it was confirmed that the bondability could be greatly improved.

On the other hand, in the Au-Sn-Bi alloy thin films of Comparative Examples 1 and 4, since shrinkage partially occurred and the films were not uniform, the films were poor as an Au-Sn alloy thin film. Moreover, in the Au-Sn-Bi alloy thin film of Comparative Example 2, since the amount of flux was small, shrinkage occurred, and unevenness was present, and the film was not uniform. In the Au-Sn-Bi alloy thin film of Comparative Example 3, since the non-halogen flux which did not include an activator, was used, shrinkage did not occur. However, since a lot of non-agglomerated powder was present on a solder, and the film of Comparative Example 3 was evaluated as a poor film. In the Au-Sn-Bi alloy thin film of Comparative Example 5, since the amount of the flux was too large, the solder was not wet-spread to cause a state in which a base layer could be seen through, and bonding strength of the device was low, and the film was evaluated as a poor film. In the Au-Sn-Bi alloy thin film of Comparative Example 6, since the amount of Sn was small, non-agglomerated powder was present, a part of the film was not formed, and the bonding strength of the device was low. In the Au-Sn-Bi alloy thin film of Comparative Example 7, since the amount of Bi was small, the thickness of the film did not become 5 µm or less. In the Au-Sn-Bi alloy thin film of Comparative Example 8, since the amount of Sn was too large, non-agglomerated powder was present, a part of the film was not formed, and the bonding strength of the device was low in comparison with Examples 1 to 7. All of the Au-Sn-Bi alloy thin films of Comparative Examples 1 to 8 were evaluated as poor.

As described above, it was confirmed that an Au-Sn-Bi alloy thin film which has the thickness of 5 µm or less and includes the eutectic structure could be formed by using an Au-Sn-Bi alloy powder paste that mixes the Au-Sn alloy powder containing 20 wt% to 25 wt% of Sn, 0.1 wt% to 5.0 wt% of Bi, and a balance of Au, and having a particle diameter of 10 µm or less with an RA flux of 15 wt% to 30 wt%, screen printing the Au-Sn-Bi alloy powder paste in a predetermined region on the Au metallized layer, and subsequently, heating, melting and then solidifying the Au-Sn-Bi alloy powder.

### INDUSTRIAL APPLICABILITY

According to the Au-Sn-Bi alloy powder paste, the Au-Sn-Bi alloy thin film and the method for forming the Au-Sn-Bi alloy thin film of the present invention, a cost reduction and a productivity improvement can be made in loading an LED device or the like onto a substrate.

## Claims

1. An Au-Sn-Bi alloy powder paste which is a mixture comprising: an Au-Sn-Bi alloy powder containing 20 wt% to 25 wt% of Sn, 0.1 wt% to 5.0 wt% of Bi, and the balance of Au and having a particle diameter of 10 µm or less; and 15 wt% to 30 wt% of an flux containing at least an activator.

2. An Au-Sn-Bi alloy thin film comprising: 20 wt% to 25 wt% of Sn, 0.1 wt% to 5.0 wt% of Bi, and the balance of Au, and having a thickness of 5 µm or less, the thin film having:
at least a eutectic structure.

3. A method for forming an Au-Sn-Bi alloy, comprising:
screen-printing an Au-Sn-Bi alloy powder paste in a predetermined region on a metallized layer, the paste being a mixture comprising: an Au-Sn-Bi alloy powder containing 20 wt% to 25 wt% of Sn, 0.1 wt% to 5.0 wt% of Bi, and the balance of Au and having a particle diameter of 10 µm or less; and 15 wt% to 30 wt% of an flux containing at least an activator; and
heating, melting and then solidifying the Au-Sn-Bi alloy powder to form an Au-Sn alloy thin film having at least a eutectic structure.

4. The method for forming an Au-Sn alloy thin film according to Claim 3, wherein the screen-printing is performed by gap printing using a screen mask which has a mesh corresponding to the predetermined region.
